# EUROPÄISCHE PATENTSCHRIFT

(11) **EP 1 716 990 B1**
(45) Veröffentlichungstag und Bekanntmachung des Hinweises auf die Patenterteilung: **16.01.2008**
(21) Anmeldenummer: 06006983.8
(22) Anmeldetag: 31.03.2006
(51) Int. Cl.: B27C 3/04, B27C 3/06, B27M 1/08, B23Q 1/62, B23Q 7/00

(54) **Im Durchlauf arbeitende Holzbearbeitungsmaschine mit Bearbeitungseinheit**
Continuously operating wood working machine with machining unit
Machine à travailler le bois opérant en continu avec unité d'usinage

(30) Priorität: 29.04.2005 DE 102005020477
(43) Veröffentlichungstag der Anmeldung: 02.11.2006
(73) Patentinhaber: IMA Klessmann GmbH Holzbearbeitungssysteme, 32312 Lübbecke (DE)
(72) Erfinder: Reichling, Hans-Ulrich, 32312 Lübbecke (DE); Tielke, Michael, 31691 Helpsen (DE)
(74) Vertreter: Elbertzhagen, Otto

(56) Entgegenhaltungen:
- DE-A1- 2 106 559
- DE-A1- 19 516 225
- US-A- 5 803 682

## Beschreibung

Die Erfindung bezieht sich auf eine Holzbearbeitungsmaschine zur Bearbeitung der Werkstücke im Durchlauf mit einer Bearbeitungseinheit gemäß den Merkmalen des Oberbegriffs des Patentanspruchs 1 (siehe z.B. DE 2106559A).

Solche Holzbearbeitungsmaschinen dienen vornehmlich zum Bearbeiten plattenförmiger Werkstücke aus Holz und/oder Holzersatzstoffen, aus denen Möbelteile, insbesondere Korpusteile, hergestellt werden. Die Durchlaufmaschinen sind auf die Kantenbearbeitung der plattenförmigen Werkstücke spezialisiert, dazu werden die Werkstücke auf Transportketten befördert und darauf mittels Oberdruckvorrichtungen niedergehalten. Die zu bearbeitenden, sich in der Durchlaufrichtung der Maschine erstreckenden Kanten oder Schmalflächenseiten der Werkstücke stehen seitlich über das Transportsystem über, um einen freien Zugang für die Bearbeitungsaggregate und -werkzeuge sicherzustellen.

Die Bearbeitungen, die man bislang an den Werkstücken im Durchlauf vorgenommen hat, betreffen vornehmlich das Anfahren eines Beschichtungsmaterials, wie Kantenstreifen, auf die Schmalflächenseiten der Werkstücke. In vielen Fällen wird eine vorherige Profilierung der Werkstückkanten vor der Beschichtung vorgesehen. Die als Beschichtungsmaterial dienenden Kantenbänder werden mit den dafür vorgesehenen Bearbeitungseinheiten so auf die Werkstückschmalseiten aufgetragen, daß sie über die im Durchlauf vornliegenden und hintenliegenden Querkanten der Werkstücke überstehen. Daher ist es erforderlich, die Überstände wegzuschneiden und dabei kommt es darauf an, das jeweilige Kantenband bündig mit den zur Durchlaufrichtung querliegenden Kanten der Werkstücke abschließen zu lassen. Dazu sind bei den bekannten Bearbeitungseinheiten der eingangs genannten Art als Bearbeitungsaggregate Kappvorrichtungen mit Fräsern oder Kreissägeblättern als Bearbeitungswerkzeuge vorgesehen, die während des Synchronlaufs mit dem jeweiligen Werkstück den Kappvorgang ausführen.

Der Erfindung liegt die Aufgabe zugrunde, eine weitere Bearbeitungseinheit für eine Durchlauf-Holzbearbeitungsmaschine zu schaffen, um im selben Durchlauf der Maschine zusätzliche Bearbeitungen anderer Art vornehmen zu können.

Diese Aufgabe wird bei einer Bearbeitungseinheit der oben genannten Art durch die kennzeichnenden Merkmale des Patentanspruchs 1 gelöst.

Für die Erfindung ist wesentlich, bei einer im Durchlauf die Werkstücke bearbeitenden Holzbearbeitungsmaschine nun auch Bohrungen in einem Arbeitsgang an den Werkstücken anbringen zu können. Solche Bohrungen im Schmalseitenbereich der plattenförmigen Werkstücke, die vornehmlich ein rechteckiges oder quadratisches Format haben, dienen in erster Linie bei Dübelverbindungen als Dübellöcher, um zwei oder mehrere plattenförmige Werkstücke über Eck miteinander verbinden zu können, wie es für die Ausbildung eines Korpusses von Kastenmöbeln erforderlich ist. Je nach Ausbildung des Bohraggregates können auch Lochreihen in die Werkstücke eingebohrt werden, die man zur Aufnahme von Bodenträgern oder dergleichen an den Innenseiten von Korpusseitenteilen vorsieht. Die neue Bohreinheit erspart es, die Bohrungen an den Werkstücken in einer gesonderten Maschine, wie einem Bohrautomaten, anzubringen.

Vorteilhafte Ausgestaltungsmerkmale der Erfindung ergeben sich aus den Unteransprüchen.

Die Erfindung wird nachfolgend anhand der Zeichnung an Ausführungsbeispielen noch näher erläutert. Dabei zeigen:
- Fig. 1: eine Schnittdarstellung einer erfindungsgemäßen Bearbeitungseinheit aus der Sicht der Schnittebene A-B in Figur 2,
- Fig. 2: die Draufsicht auf die Bearbeitungseinheit gemäß Figur 1 und
- Fig. 3: eine weitere Seitansicht der Bearbeitungseinheit in abgewandelter Ausführung.

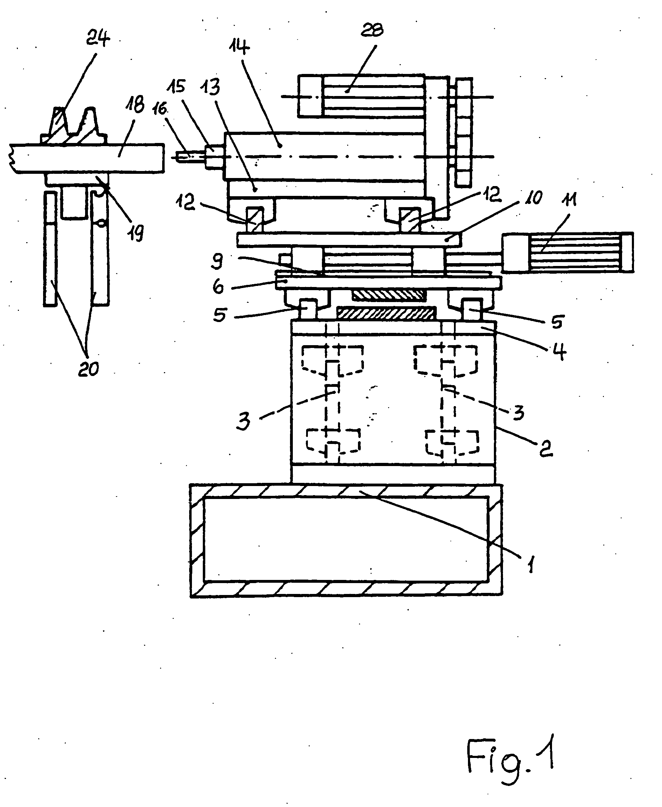

Im einzelnen erkennt man in Figur 1 ein Maschinenbett 1, welches zu einer im Durchlauf arbeitenden Holzbearbeitungsmaschine gehört, wobei auf dem Maschinenbett 1 mehrere Bearbeitungseinheiten angeordnet sein können.

Im vorliegenden Fall geht es um eine Bohreinheit, die auf dem Maschinenbett 1 aufgebaut ist. Dazu gehört ein Gestell 2, an welchem mittels einer Vertikalführung 3 ein Tisch 4 höhenjustierbar angeordnet ist. Wie bei Holzbearbeitungsmaschinen üblich, wird die Vertikalrichtung als Z-Richtung bezeichnet, die senkrecht zu der Hauptmaschinenachse, der X-Achse, und senkrecht zu der Y-Achse steht, letztere verläuft wiederum senkrecht zur der X-Achse und bildet mit dieser zusammen eine horizontale X-Y-Ebene.

Auf dem Tisch 4 befindet sich eine Schlittenführung 5, die sich in Richtung der X-Achse der Maschine erstreckt. Auf der Schlittenführung 5 ist ein in Richtung der X-Achse vor- und rückfahrbarer Schlitten 6 gelagert, der mittels eines Linearmotors 7, 8 verfahren wird. Der Linearmotor 7, 8 weist ein Primärteil 7 auf, welches als Stator feststehend auf der Oberseite der Tischplatte 4 angeordnet ist. Das zum Linearmotor 7, 8 zugehörige Sekundärteil 8 ist mit dem Schlitten 6 fest verbunden und befindet sich an dessen Unterseite, wo es im Abstand eines Luftspaltes für den Übergang des magnetischen Wanderfeldes dem Primärteil 7 auf dem Tisch 4 gegenüberliegt.

An der Oberseite des Schlittens 6 ist eine Querführung 9 vorgesehen, die in Richtung der Y-Achse verläuft. Darauf ist ein Zustellschlitten 10 gelagert, der mittels eines Zustellantriebs 11 in Richtung der Y-Achse justiert werden kann. Auf dem Zustellschlitten 10 findet sich eine in der X-Richtung verlaufende Zustellführung 12, auf der Schlitten 13 gelagert sind, die entsprechend in Richtung der X-Achse der Maschine justiert werden können.

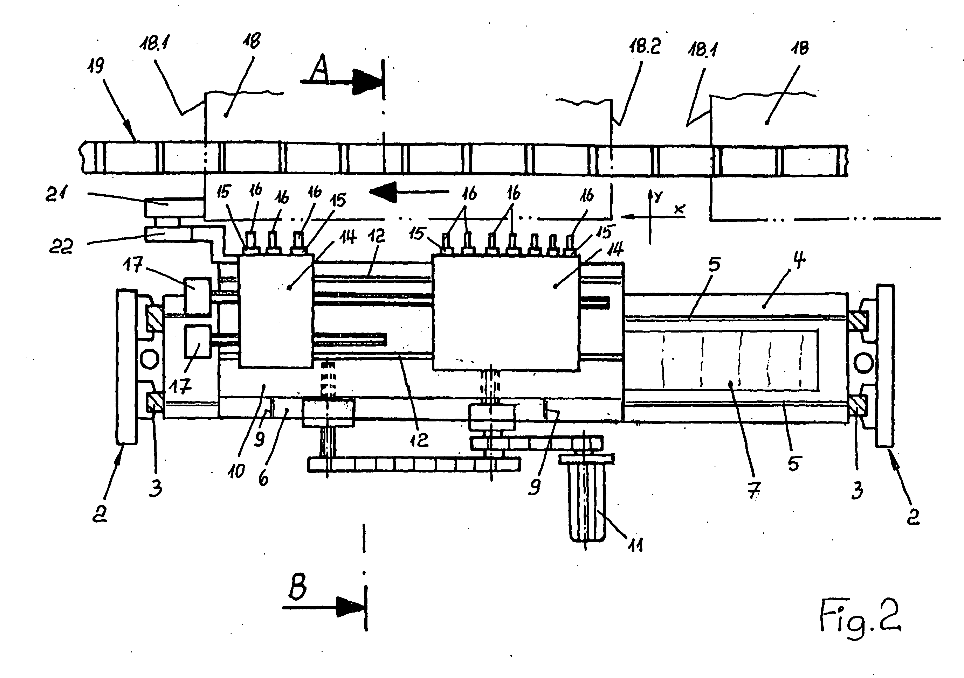

Die Schlitten 13 tragen zwei Bohraggregate 14, wie Figur 2 wiedergibt. Das hier links dargestellte Bohraggregat 14 ist ein sogenannter Dreispindler, der entsprechend drei Bohrwerkzeuge 16 aufweist, welche miteinander achsparallel in Richtung der Y-Achse der Maschine ausgerichtet sind. Zudem liegen die Bearbeitungswerkzeuge in einer X-Y-Ebene, also einer Bearbeitungsebene, deren Höhe mittels der Vertikalführung 3 eingestellt wird und in der die Bohrwerkzeuge 16 mittels des Zustellschlittens 10 und des weiteren Schlittens 13 positioniert werden können. Den Vorschub der Bohrwerkzeuge 16 besorgen Pinolen 15, die in Richtung der Y-Achse in dem Bohraggregat 14 aus- und einfahrbar gelagert sind.

Bei dem zweiten, auf der Zustellführung 12 angeordneten Bohraggregat 14 handelt es sich um einen sogenannten Siebenspindler. Demgemäß sind sieben Bohrwerkzeuge 16 hier vorhanden, die in gleicher Weise wie die Bohrwerkzeuge 16 des ersten Bohraggregates 14, also des Dreispindlers, positioniert werden können. Für die Bohrwerkzeuge 16 jedes Bohraggregates 14 ist ein Antrieb 28 vorgesehen, der in Figur 1, jedoch nicht in Figur 2 wiedergegeben ist. Zusätzlich sind das erste Bohraggregat 14 und das zweite Bohraggregat 14 noch relativ zueinander in Richtung der X-Achse der Maschine unabhängig voneinander verstellbar. Zwar sind beide Bohraggregate 14 gemeinsam auf der Zustellführung 12 gelagert, es kommt jedoch darauf an, ihren Abstand voneinander verändern zu können, wobei die beiden Bohraggregate 14 auch einander anstoßend angeordnet sein können und sich dann zu einem Block ergänzen, der als Zehnspindler bezeichnet werden kann. Jedes der Bohraggregate 14 ist mit einem eigenen Positionierantrieb 17 versehen, über den die Zustellung des jeweiligen Schlittens 13 in der X-Richtung vorgenommen wird.

Wie sich weiter aus den Figuren 1 und 2 ergibt, sind die Bohraggregate 14 so angeordnet und positionierbar, um mit ihnen in der Durchlaufmaschine an den Schmalseitenflächen von an ihnen vorbeilaufenden, plattenförmigen Werkstücken 18 Horizontalbohrungen anbringen zu können. Die Werkstücke 18 haben ein quadratisches oder rechteckiges Format und werden flachliegend auf Transportketten 19 befördert, von denen in den Figuren 1 und 2 nur diejenige dargestellt ist, die der wiedergegebenen Bohreinheit benachbart ist. Es versteht sich, daß bei gleichzeitiger Bearbeitung der jeweils einander gegenüberliegenden Werkstückschmalseiten sich in spiegelbildlicher Anordnung zu der Bohreinheit eine zweite Bohreinheit mit den gleichen Merkmalen befindet. Die Transportkette 19 wird mit ihren Kettengliedern auf Tragschienen 20 abgestützt und geführt, auf der Transportkette 19 werden die plattenförmigen Werkstücke 18 mittels eines Oberdrucks 24 niedergehalten. Die Transportkette 19 und der Oberdruck 24 verlaufen entlang mehrerer Bearbeitungseinheiten der Durchlauf-Holzbearbeitungsmaschine.

Die Werkstücke 18 werden auf der Transportkette 19 kontinuierlich mit konstanter Geschwindigkeit in Richtung der X-Achse der Maschine befördert. Folglich müssen die Bohraggregate 14 während ihres jeweiligen Arbeitsspiels mit den Werkstücken 18 entlang einem Bearbeitungsweg mitgeführt werden. Dies besorgt der Schlitten 6, der über den Linearmotor 7, 8 angetrieben wird. Grundsätzlich kann die Steuerung des Linearmotors 7, 8 so eingerichtet sein, daß der Schlitten 6 in einer Anlaufphase auf die Werkstückgeschwindigkeit, also auf eine Synchrongeschwindigkeit, gebracht wird und mit dem Erreichen der Synchrongeschwindigkeit die Bohraggregate 14 in Richtung der X-Achse der Maschine so positioniert sind, daß im richtigen Abstand von den Werkstückquerkanten 18.1 oder 18.2, also den in Durchlaufrichtung vorn- bzw. hintenliegenden Werkstückkanten, die vorzusehenden Bohrungen an den in der Durchlaufrichtung liegenden Schmalseiten angebracht werden. Ist der Bearbeitungsweg durchlaufen und sind dementsprechend die Bohrwerkzeuge 16 aus dem Werkstückeingriff zurückgezogen, wird der Schlitten 6 über den Linearmotor 7, 8 in seine Ausgangslage entgegen der Durchlaufrichtung zurückgefahren. Der Start des Schlittens 6 wird durch einen Sensor 23 ausgelöst, der auf eine Bezugskante oder -fläche an den Werkstücken 18 oder auf eine daran angebrachte Markierung reagiert. Der Sensor 23 ist entsprechend in der Durchlaufrichtung gesehen ausreichend weit vor der Ausgangs- oder Startposition des Schlittens 6 angeordnet.

Um die Stichmasse für die Bohrungen an den Schmalflächenseiten der Werkstücke 18 besonders exakt einhalten zu können, kann an dem vor- und rücklaufenden Schlitten 6 ein Taster 21 vorgesehen werden, der mittels eines Schwenkarms 22 in den Durchlaufweg der Werkstücke 18 eingefahren werden kann. Dies geschieht bei jedem Start des Schlittens 6, der über den Sensor 23 ausgelöst wird. Über den Linearmotor 7, 8 wird der Schlitten 6 so beschleunigt, daß er die Synchrongeschwindigkeit, also die Werkstückgeschwindigkeit erreicht. Hierbei hat entweder die in Durchlaufrichtung vornliegende Querkante 18.1 des betreffenden Werkstücks 18 den Taster 21 bereits eingeholt und liegt daran an, oder es wird zu diesem Zweck kurzzeitig die Geschwindigkeit des Schlittens 6 vermindert. Mit der Anlage des Werkstücks 18 am Taster 21 hält der Linearmotor 7, 8 den Schlitten 6 exakt auf der Synchrongeschwindigkeit, wozu zu Regelzwecken ein Bruchteil der gesamt erforderlichen Vorschubkraft für den Schlitten 6 über den Taster 21 übertragen und ausgewertet wird. Damit der Taster 21 reibungsfrei von der in Durchlaufrichtung vornliegenden Kante 18.1 des Werkstücks 18 wieder freikommen kann, läßt man am Ende des Bearbeitungsweges den Schlitten 6 gegenüber dem Werkstück 18 etwas vorlaufen, beschleunigt den Schlitten 6 also über die Synchrongeschwindigkeit hinaus, um dann bis zum Ende des Vorlaufweges den Taster aus dem Durchlaufweg des Werkstücks 8 herauszufahren. Folglich ist der gesamte Vorlaufweg des Schlittens 6 etwas länger als der Bearbeitungsweg. Der Rücklauf des Schlittens 6 über die gleiche Weglänge erfolgt in so kurzer Zeit, daß auch bei dichter Folge der Werkstücke 18 der Vorlauf des Schlittens 6 passend gestartet werden kann.

Die Bohraggregate 14 können anders als dargestellt so ausgebildet und angeordnet sein, daß mit ihren Bohrwerkzeugen 16 Vertikalbohrungen im Bereich der oberen und unteren Breitseiten der Werkstücke 18 angebracht werden können. Darauf ist der Überstand der Werkstücke 18 abzustellen, mit dem die Werkstücke 18 mit ihrem Längsseitenbereich, der sich in der Durchlaufrichtung erstreckt, über die Transportkette 19 und den Oberdruck 24 hinausragen.

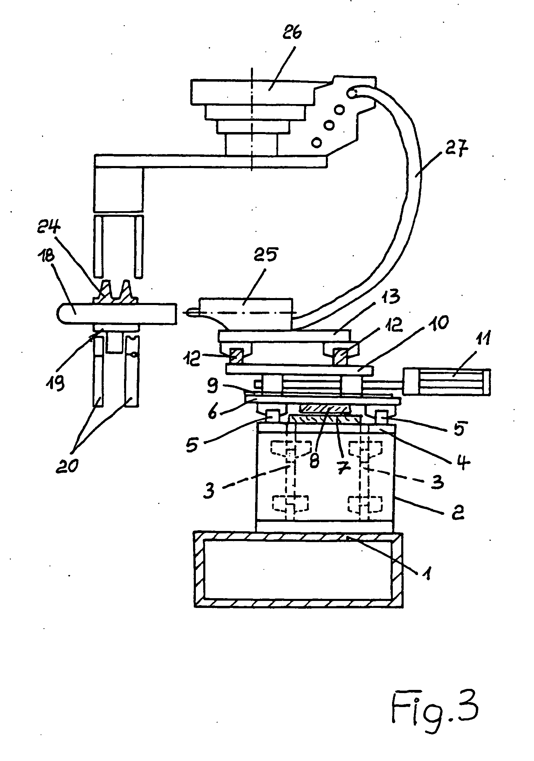

Die vorstehend beschriebene Bohreinheit kann mit geringfügigen Abwandlungen als weitere Bearbeitungseinheit eingesetzt werden. Dies veranschaulicht Figur 3. Der Aufbau vom Maschinenbett 1 bis zum Schlitten 13, der anstelle der Bohraggregate 14 ein anderes Bearbeitungsaggregat 25 trägt, ist identisch mit dem der Bohreinheit nach den Figuren 1 und 2. Bei dem Bearbeitungsaggregat 25 handelt es sich zum einen um ein Leimangabeaggregat, welches dann zum Einsatz kommt, wenn die an den Werkstücken 18 angebrachten Bohrungen als Dübellöcher dienen. Das Leimangabeaggregat ist entspechend mit einer Düse ausgestattet, über die der Leim ausgetragen und in die Bohrlöcher eingegeben werden kann. Die Justage und der Synchronlauf des Leimangabeaggregates wird mit den gleichen Mitteln vorgenommen, wie es anhand der vorstehend beschriebenen Bohreinheit erfolgt.

In weiterer Modifikation der anhand der Figuren 1 und 2 beschriebenen Bohreinheit kann als Bearbeitungsaggregat 25 zum anderen ein Dübeleinsetzaggregat vorgesehen sein. Besonders vorteilhaft ist, in einer Folge hintereinander in der Durchlaufmaschine eine Bohreinheit, eine Leimangabeeinheit und eine Dübeleinsetzeinheit vorzusehen, sofern Werkstücke gefertigt werden, von denen zwei oder mehrere beispielsweise zur Bildung eines Möbelkorpus miteinander verdübelt werden.

Für den Fall der Ausbildung der Bearbeitungseinheit als Dübeleinsetzeinheit ist in Figur 3 die Anordnung eines Dübelmagazins 26 oberhalb des Bearbeitungsaggregates 25 vorgesehen, welches mittels einer Dübel-Zuführleitung 27 mit dem Magazin 26 in Verbindung steht.

## Patentansprüche

1. Holzbearbeitungsmaschine zur Bearbeitung der Werkstücke im Durchlauf mit einer Bearbeitungseinheit mit einem Schlitten (6), der auf einer in der Durchlaufrichtung sich erstreckenden Führung (5) verfahrbar ist und an dem ein Bearbeitungsaggregat (14) mit zumindest einem Bearbeitungswerkzeug (16) angeordnet ist, welches bis in den Durchlaufweg der Werkstücke (18) hinein bewegbar ist, wobei der Schlitten (6) einen Antrieb (7, 8) hat, der ihn im Vorlauf von einer Ausgangsposition aus auf eine mit den Werkstücken (18) synchrone Geschwindigkeit entlang einem Bearbeitungsweg bringt und nach dessen Durchlauf im Rücklauf in die Ausgangslage zurückfährt, wobei ein Vorschubantrieb (15) zum Vorfahren des Bearbeitungswerkzeugs (16) für den Werkstückeingriff und Rückfahren des Bearbeitungswerkzeugs (16) während des Synchronlaufs vorhanden ist,
**dadurch gekennzeichnet,**
**daß** das Bearbeitungsaggregat (14) ein Bohraggregat mit zumindest einem Bohrwerkzeug (16) ist, daß an dem vor- und rücklaufenden Schlitten (6) eine in der Durchlaufrichtung sich erstreckende Zustellführung (12) und ein Positionierantrieb (17) für das Bohraggregat (14) angeordnet ist und daß das Bohraggregat (14) mit seiner Zustellführung (12) und seinem Positionierantrieb (17) auf einem Zustellschlitten (10) angeordnet ist, der auf einer Querführung (9) senkrecht zur Durchlaufrichtung verstellbar ist, wobei diese Querführung (9) an dem in der Durchlaufrichtung vor- und rücklaufenden Schlitten (6) angeordnet ist.

2. Holzbearbeitungsmaschine nach Anspruch 1,
**dadurch gekennzeichnet,**
**daß** das zumindest eine Bohraggregat (14) zwei oder mehrere Bohrwerkzeuge (16) aufweist, die miteinander achsparallel quer zur Durchlaufrichtung angeordnet sind.

3. Holzbearbeitungsmaschine nach Anspruch 1 oder 2,
**dadurch gekennzeichnet,**
**daß** der Vorschubantrieb für das zumindest eine Bohrwerkzeug (16) als am Bohraggregat (14) aus- und einfahrbare Pinole (15) ausgebildet ist.

4. Holzbearbeitungsmaschine nach einem der Ansprüche 1 - 3,
**dadurch gekennzeichnet,**
**daß** das zumindest eine Bohraggregat (14) zur Ausführung von Horizontalbohrungen wenigstens ein horizontal ausgerichtetes Bohrwerkzeug (16) aufweist.

5. Holzbearbeitungsmaschine nach einem der Ansprüche 1 - 3,
**dadurch gekennzeichnet,**
**daß** das zumindest eine Bohraggregat (14) zur Ausführung von Vertikalbohrungen wenigstens ein vertikal ausgerichtetes Bohrwerkzeug (16) aufweist.

6. Holzbearbeitungsmaschine nach einem der Ansprüche 1 - 5,
**dadurch gekennzeichnet,**
**daß** auf der Zustellführung (12) zwei oder mehrere Bohraggregate (14) gemeinsam angeordnet sind, deren Bohrwerkzeuge (16) miteinander achsparallel ausgerichtet sind, wobei die Bohraggregate (14) je einen eigenen Positionierantrieb (17) haben.

7. Holzbearbeitungsmaschine nach Anspruch 6,
**dadurch gekennzeichnet,**
**daß** jedes Bohrwerkzeug (16) der Bohraggregate (14) an einer separat steuerbaren Pinole (15) aufgenommen ist.

8. Holzbearbeitungsmaschine nach einem der Ansprüche 1 - 7,
**dadurch gekennzeichnet,**
**daß** das zumindest eine Bohraggregat (14) in Richtung einer dritten Achse, die senkrecht auf der Durchlaufrichtung sowie auf seiner Zustellrichtung steht, justierbar ist.

9. Holzbearbeitungsmaschine nach einem der Ansprüche 1 - 8,
**dadurch gekennzeichnet,**
**daß** der Antrieb des in der Durchlaufrichtung vor- und rücklaufenden Schlittens (6) als Linearmotor (7, 8) ausgebildet ist.

10. Holzbearbeitungsmaschine nach einem der Ansprüche 1 - 9,
**dadurch gekennzeichnet,**
**daß** an dem in der Durchlaufrichtung vor- und rücklaufenden Schlitten (6) ein in den Durchlaufweg der Werkstücke (18) einfahrbarer Taster (21) angeordnet ist, gegen den die Werkstücke (18) mit einer Bezugskante oder -fläche (18.1) auflaufen, wodurch der Schlittenantrieb im Vorlauf so gesteuert ist, daß die Geschwindigkeit des Schlittens (6) gegenüber der Synchrongeschwindigkeit bis zum Auflaufen eines Werkstücks (18) auf den Taster (21) verzögert ist und ab dann die Vorschubkraft des Schlittenantriebs abzüglich eines vom Werkstück (18) auf den Taster (21) übertragenen Bruchteils der insgesamt erforderlichen Vorschubkraft an die Einhaltung der Synchrongeschwindigkeit des Schlittens (6) angepaßt ist.

11. Holzbearbeitungsmaschine nach Anspruch 10,
**dadurch gekennzeichnet,**
**daß** der Antrieb des Schlittens (6) so gesteuert ist, daß vom Ende des Bearbeitungsweges bis zum Ende des Vorlaufweges der Schlitten (6) auf eine gegenüber der Synchrongeschwindigkeit höhere Geschwindigkeit beschleunigt ist und der Taster (21) nach dem Voreilen gegenüber dem Werkstück (18) aus dem Werkstück-Durchlaufweg herausgefahren wird.

12. Holzbearbeitungsmaschine nach Anspruch 10 oder 11,
**dadurch gekennzeichnet,**
**daß** an einer Stelle vor der Ausgangsposition des Schlittens (6) in der Durchlaufrichtung gesehen ein das jeweils ankommende Werkstück (18) erfassender Sensor (23) angeordnet ist, der den Start des Arbeitsspiels des Bohraggregates (14) einschließlich dem Verfahren des Schlittens auslöst.

13. Holzbearbeitungsmaschine nach einem der Ansprüche 1 - 12,
**dadurch gekennzeichnet,**
**daß** in der Durchlaufrichtung nachfolgend der ersten Bearbeitungseinheit eine zweite Bearbeitungseinheit entsprechend den Merkmalen der ersten Bearbeitungseinheit gemäß dem Oberbegriff des Patentanspruchs 1 angeordnet ist, deren Bearbeitungsaggregat (24) ein Leimangabeaggregat ist, welches als das zumindest eine Bearbeitungswerkzeug eine Düse für den Leimaustrag aufweist.

14. Holzbearbeitungsmaschine nach Anspruch 13,
**dadurch gekennzeichnet,**
**daß** in der Durchlaufrichtung nachfolgend der zweiten Bearbeitungseinheit eine dritte Bearbeitungseinheit entsprechend den Merkmalen der ersten Bearbeitungseinheit gemäß dem Oberbegriff des Patentanspruchs 1 angeordnet ist, deren Bearbeitungsaggregat (25) ein Dübeleinsetzaggregat ist, welches als das zumindest eine Bearbeitungswerkzeug ein Dübeleinpreßwerkzeug aufweist.

## Claims

1. Woodworking machine for machining workpieces in a continuous pass with a machining unit with a slide carriage (6) which is movable on a guide (5) which extends in the flow direction and on which a machining unit (14) is mounted with at least one machining tool (16) which is movable up into the flow path of the workpieces (18) wherein the slide carriage (6) has a drive (7, 8) which in the forward motion brings it from a starting position to a speed synchronous with the workpieces (18) along a machining path and after the run through returns it in the return motion back to the starting position wherein a feed drive (15) is provided for moving the machining tool (16) forwards to engage the workpiece and moving the machining tool (16) back during the synchronous run,
**characterised in that**
the machining unit (14) is a drilling assembly with at least one drilling tool (16), and **in that** on the slide carriage (6) which moves back and forwards there is a feeding guide (12) extending in the flow direction and a positioning drive (17) for the drilling assembly (14) and **in that** the drilling assembly is mounted with its feeding guide (12) and positioning drive (17) on a feeding carriage (10) which is displaceable on a cross guide (9) perpendicular to the flow direction, wherein this cross guide (9) is mounted on the slide carriage (6) which moves forwards and backwards in the flow direction.

2. Woodworking machine according to claim 1,
**characterised in that**
the at least one drilling assembly (14) has two or more drilling tools (16) which are mounted axially parallel with one another across the flow direction.

3. Woodworking machine according to claim 1 or 2,
**characterised in that**
the feed drive for the at least one drilling tool (16) is formed as a spindle sleeve (15) which can be moved in and out on the drilling assembly (14).

4. Woodworking machine according to one of claims 1 to 3,
**characterised in that**
the at least one drilling assembly (14) has at least one horizontally aligned drilling tool (16) for executing horizontal bores.

5. Woodworking machine according to one of claims 1 to 3,
**characterised in that**
the at least one drilling assembly (14) has at least one vertically aligned drilling tool (16) for executing vertical bores.

6. Woodworking machine according to one of claims 1 to 5,
**characterised in that**
two or more drilling assemblies (14) are mounted jointly on the feeding guide (12) wherein the drilling tools (16) of the drilling assemblies are aligned axially parallel with one another and the drilling assemblies (14) each have their own positioning drive (17).

7. Woodworking machine according to claim 6,
**characterised in that**
each drilling tool (16) of the drilling assemblies (14) is housed on a separately controllable spindle sleeve (15) .

8. Woodworking machine according to one of claims 1 to 7,
**characterised in that**
the at least one drilling assembly (14) can be adjusted in the direction of a third axis which is set at right angles to the flow direction as well as to its feeding direction.

9. Woodworking machine according to one of claims 1 to 8,
**characterised in that**
the drive of the slide carriage (6) which runs backwards and forwards in the flow direction is designed as a linear motor (7, 8).

10. Woodworking machine according to one of claims 1 to 9,
**characterised in that**
on the slide carriage (6) which moves backwards and forwards in the flow direction there is a scanner (21) mounted to move into the flow path of the workpieces (18) and against which the workpieces (18) run up with a reference edge or surface (18.1) whereby the slide carriage drive is controlled in the forward motion so that the speed of the slide carriage (6) is decelerated with respect to the synchronous speed until the workpiece (18) runs up to the scanner (21) and from then the feed force of the slide carriage drive minus a fraction of the overall required feed force which is transferred from the workpiece (18) to the scanner (21), is adapted to correspond to the synchronous speed of the slide carriage (6).

11. Woodworking machine according to claim 10,
**characterised in that**
the drive of the slide carriage (6) is controlled so that from the end of the machining path up to the end of the forward motion path the slide carriage is accelerated to a higher speed compared to the synchronous speed, and the scanner (21) after leading relative to the workpiece (18) is moved out from the workpiece flow path.

12. Woodworking machine according to claim 10 or 11,
**characterised in that**
at a place in front of the starting position of the slide carriage (6) seen in the flow direction there is a sensor (23) which detects the relevant incoming workpiece (18) and triggers the start of the working cycle of the drilling assembly (14) including the travel of the slide carriage.

13. Woodworking machine according to one of claims 1 to 12,
**characterised in that**
in the flow direction following the first machining unit there is a second machining unit corresponding to the features of the first machining unit according to the preamble of patent claim 1, whose machining assembly (24) is a glue dispensing assembly which has as the at least one machining tool a nozzle for the glue outlet.

14. Woodworking machine according to claim 13,
**characterised in that**
in the flow direction following the second machining unit there is a third machining unit corresponding to the features of the first machining unit according to the preamble of patent claim 1, whose machining assembly (25) is a dowel insert assembly which has a dowel insertion tool as the at least one machining tool.

## Revendications

1. Machine à travailler le bois pour usiner des pièces en continu, avec une unité d'usinage avec un chariot (6) qui peut être conduit sur un guide (5) s'étendant dans la direction de passage et auquel est agencé un ensemble d'usinage (14) avec au moins un outil d'usinage (16) qui peut être déplacé jusque dans la voie de passage des pièces (18), le chariot (6) étant équipé d'un entraînement (7, 8) qui le déplace en marche avant, à partir d'une position initiale, en synchronisme avec les pièces (18), le long d'une voie d'usinage, et, après avoir parcouru celle-ci, le ramène, en marche arrière, dans la position initiale, une commande d'avance (15) étant présente pour l'avance de l'outil d'usinage (16), pour la mise en prise avec l'outil, et la marche arrière de l'outil d'usinage (16) pendant la marche synchrone,
**caractérisée en ce que**
l'ensemble d'usinage (14) est un ensemble de forage avec au moins un outil de forage (16), **en ce que**, sur le chariot (6) se déplaçant en avant et en arrière, sont agencés un dispositif de guidage (12), qui s'étend dans la direction de passage, et une commande de positionnement (17) pour l'ensemble de forage (14), et **en ce que** l'ensemble de forage (14) est agencé, avec son dispositif de guidage (12) et sa commande de positionnement (17), sur un chariot (10) qui peut être déplacé sur un guide transversal (9), perpendiculairement à la direction de passage, ce guide (9) étant agencé sur le chariot (6) qui se déplace en avant et en arrière dans la direction de passage.

2. Machine à travailler le bois selon la revendication 1,
**caractérisée en ce que**
l'ensemble de forage (14) au moins prévu présente deux ou plusieurs outils de forage (16) qui sont agencés, à axes parallèles les uns par rapport aux autres, perpendiculairement à la direction de passage.

3. Machine à travailler le bois selon revendication 1 ou 2,
**caractérisée en ce que**
la commande d'avance pour l'outil de forage (16) au moins prévu est réalisé en tant que douille de broche (15) qui, équipant l'ensemble de forage (14), peut être extraite et rentrée.

4. Machine à travailler le bois selon l'une des revendications 1 à 3,
**caractérisée en ce que**,
pour l'exécution de trous horizontaux, l'outil de forage (14) au moins prévu présente au moins un outil de forage (16) orienté horizontalement.

5. Machine à travailler le bois selon l'une des revendications 1 à 3,
**caractérisée en ce que**
pour l'exécution de trous verticaux, l'outil de forage (14) au moins prévu présente au moins un outil de forage (16) orienté verticalement.

6. Machine à travailler le bois selon l'une des revendications 1 à 5,
**caractérisée en ce que**,
sur le dispositif de guidage (12), sont agencés, en commun, deux ou plusieurs ensemble de forage (14) dont les outils de forage (16) sont orientés à axes parallèles les uns par rapport aux autres, lesdits ensembles de forage (14) possédant chacun une propre commande de positionnement (17).

7. Machine à travailler le bois selon la revendication 6,
**caractérisée en ce que**
chaque outil de forage (16) des ensembles de forage (14) est reçu dans une douille de broche (15) pouvant être commandée séparément.

8. Machine à travailler le bois selon l'une des revendications 1 à 7,
**caractérisée en ce que**
l'ensemble de forage (14) au moins prévu peut être ajusté dans la direction d'un troisième axe, qui est perpendiculaire à la direction de passage ainsi qu'à sa direction de déplacement.

9. Machine à travailler le bois selon l'une des revendications 1 à 8,
**caractérisée en ce que**
la commande du chariot (6), mobile en avant et en arrière dans la direction de passage, est réalisée en tant que moteur linéaire (7, 8).

10. Machine à travailler le bois selon l'une des revendications 1 à 9,
**caractérisée en ce que**,
sur le chariot (6), mobile en avant et en arrière dans la direction de passage, est agencé un palpeur (21) pouvant être amené dans la voie de passage des pièces (18), contre lequel portent les pièces (18) avec un chant ou une surface de référence (18.1), ce qui commande l'entraînement du chariot en marche avant, de telle sorte que la vitesse du chariot (6) est ralentie par rapport à la vitesse synchrone jusqu'à l'entrée en contact d'une pièce (18) avec le taster (21) et, à partir de là, la force d'entraînement de la commande du chariot, moins une fraction transmise au palpeur (21) par la pièce (18), est ajustée à la force d'entraînement globalement nécessaire au maintien de la vitesse synchrone du chariot (6).

11. Machine à travailler le bois selon la revendication 10,
**caractérisée en ce que**
l'entraînement du chariot (6) est commandé de sorte que, de la fin de la voie d'usinage jusqu'à la fin du parcours de marche avant des chariots (6), ait lieu une accélération à une vitesse plus élevée que la vitesse synchrone, et que le palpeur (21) soit conduit hors de la voie de passage des pièces après avoir dépassé la pièce (18).

12. Machine à travailler le bois selon revendication 10 ou 11,
**caractérisée en ce que**,
à un endroit situé en amont de la position initiale du chariot (6), vu dans la direction de passage, est agencé un détecteur (23) détectant l'approche de chaque pièce (18), lequel déclenche le démarrage du cycle de fonctionnement de l'ensemble de forage (14), y compris le déplacement du chariot.

13. Machine à travailler le bois selon l'une des revendications 1 à 12,
**caractérisée en ce que**,
dans la direction de passage, après la première unité d'usinage, est agencée une deuxième unité d'usinage conforme aux caractéristiques de la première unité d'usinage selon le préambule de la revendication 1, dont l'ensemble d'usinage (24) est un ensemble de distribution de colle qui, en tant qu'outil d'usinage au moins prévu, présente une buse pour l'application de la colle.

14. Machine à travailler le bois selon la revendication 13,
**caractérisée en ce que**,
dans la direction de passage, après la deuxième unité d'usinage, est agencée une troisième unité d'usinage conforme aux caractéristiques de la première unité d'usinage selon le préambule de la revendication 1, dont l'ensemble d'usinage (25) est un ensemble de chevillage qui, en tant qu'outil d'usinage au moins prévu, présente un outil d'insertion de chevilles.
